# DEMANDE DE BREVET EUROPEEN

(11) **EP 0 704 340 A1**
(43) Date de publication de la demande: **03.04.1996**
(21) Numéro de dépôt: 95401976.6
(22) Date de dépôt: 31.08.1995
(51) Int. Cl.: B60N 2/30

(54) **Siège escamotable pour véhicules**

(30) Priorité: 06.09.1994 FR 9410662
(71) Demandeur: Société Anonyme dite: REGIE NATIONALE DES USINES RENAULT, F-92109 Boulogne Billancourt (FR)
(72) Inventeur: David, Jean-Paul, F-91430 Vauhallan (FR); Bidault, Patrick, F-78330 Fontenay le Fleury (FR); Corbin, Daniel, F-92100 Boulogne Billancourt (FR)
(74) Mandataire: Ernst-Schonberg, Michel

(57) **Abrégé**

Siège escamotable monté sur le plancher de chargement (25) d'un véhicule, du type comportant une assise relevable (11) contre la face d'appui du dossier (12) dudit siège dans sa position de rangement le long d'une paroi latérale (6) de l'habitacle du véhicule, caractérisé par le fait que la partie postérieure du siège (10) porte deux pieds d'ancrage (24, 24') au contact du plancher (25) dont l'un au moins possède un centre de rotation (O), tandisque l'autre pied coopère par un moyen d'immobilisation (26) au contact du plancher, à l'obtention de deux positions différentes du siège respectivement selon une orientation transversale adossée à une autre rangée de sièges et une position longitudinale de rangement le long de ladite paroi latérale.

## Description

L'invention concerne les sièges escamotables de véhicules montés sur le plancher de chargement d'un compartiment à bagages qui sont contigus à une autre rangée de sièges.

L'invention concerne plus particulièrement un siège comportant une assise relevable au contact du dossier dudit siège dans une position orientée perpendiculairement au sens de l'avancement du véhicule.

La publication FR-A-2359723 décrit un siège rabattable contre une paroi latérale de l'habitacle autour d'un axe longitudinal, rigidement relié au véhicule.

A cet effet la branche latérale externe de l'armature de l'assise est supportée par le dit axe.

La publication FR-A-2686050 décrit un siège de secours susceptible d'occuper une position de rangement accolée à un siège du véhicule et une position de service orientée perpendiculairement au sens de l'avancement du véhicule.

Les manipulations de tels sièges sont trop souvent malcommodes et nécessitent des efforts incompatibles avec la recherche d'une rapidité d'exécution de la mise en service ou de la réalisation du rangement.

Pour remédier à cet inconvénient, la publication FR-A-2079920 propose un siège escamotable dont le dossier est automatiquement verrouillé au contact d'une paroi de l'habitacle lorsque le siège est actionné vers sa position de service et déverrouillé lorsque l'on soulève l'assise dans le but d'obtenir le rangement du siège.

La position escamotée d'un tel siège n'est pas satisfaisante lorsque le plancher du véhicule porte par exemple le logement d'une roue de secours et de ses accessoires de montage.

Il importe dans ce cas d'escamoter rapidement le siège dans une position différente compatible avec la nécessité d'opérer le chargement du véhicule et de rechercher les moyens d'une remise en service rapide du siège à la suite du déchargement du véhicule.

Selon l'invention, la partie postérieure de l'assise possède deux pieds d'ancrage au contact du plancher de chargement du véhicule dont l'un au moins possède un centre de rotation, tandis que l'autre coopère par un moyen d'immobilisation au contact du plancher, à l'obtention de deux positions différentes du siège, respectivement selon une orientation transversale d'utilisation adossée à une autre rangée de sièges et une position longitudinale de rangement le long d'une paroi latérale de l'habitacle du véhicule.

A la suite du relevage de l'assise, l'ensemble du siège peut être orienté par suite d'une rotation autour d'un axe vertical et être immobilisé dans sa position de rangement.

Le siège ainsi réalisé possède l'avantage de pouvoir occuper deux positions de rangement le long de l'une ou l'autre paroi latérale selon que l'un et/ou l'autre pied d'ancrage possède la configuration souhaitée au changement d'orientation du siège.

D'autres caractéristiques et avantages de l'invention apparaîtront à la lecture d'un mode de réalisation préférentiel du siège en référence au dessin annexé dans lequel :
- la figure 1 est une représentation perspective avec arrachement partiel de la partie arrière d'un habitacle de véhicule équipé d'un siège escamotable conforme à l'invention, en position d'utilisation dudit siège,
- la figure 2 est une représentation perspective de l'habitacle représenté à la figure 1 équipé du siège en position de rangement adossée à une banquette de véhicule,
- la figure 3 est une représentation perspective de l'habitacle représenté à la figure 1 équipé du siège en position de rangement adossée à une paroi latérale de l'habitacle du véhicule,
- la figure 4 est une représentation perspective de l'armature de l'assise du siège équipée de deux pieds d'ancrage,
- la figure 5 est une représentation perspective d'un pied d'ancrage et de sa liaison avec un élément de l'armature de l'assise du siège.

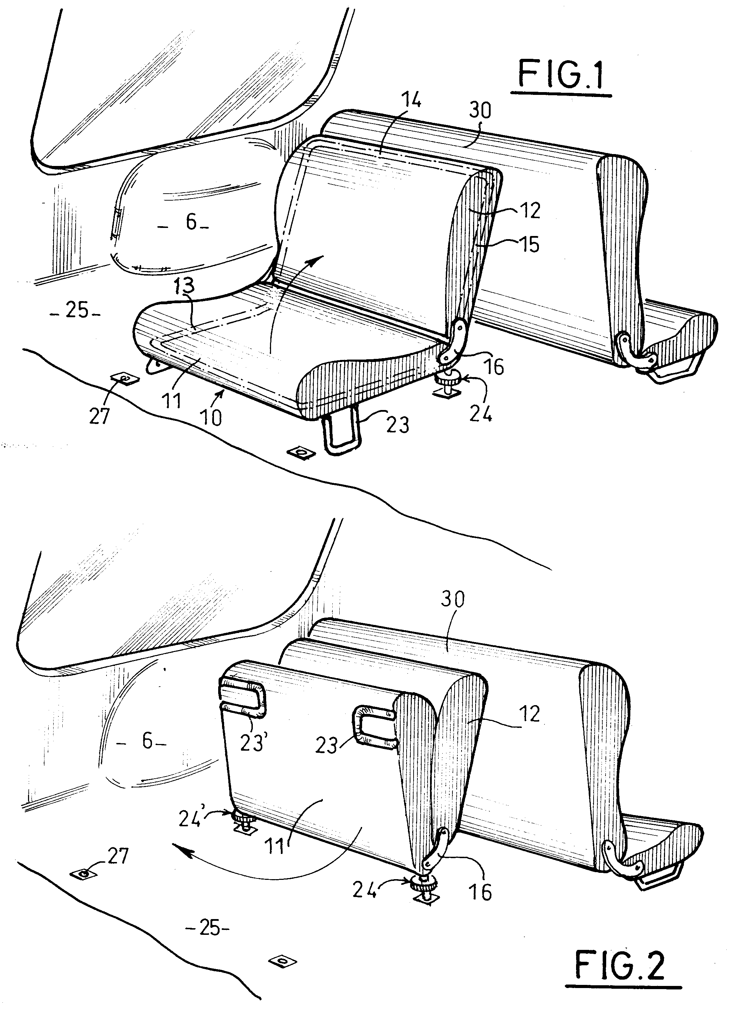

Les figures 1 à 3 représentent l'agencement d'un siège arrière escamotable, formé par une banquette repliable 10 orientée suivant le sens contraire de l'avancement du véhicule.

La banquette 10 possède ainsi que cela est bien connu une assise relevable 11 contre la face d'appui du dossier 12.

A cet effet l'assise 11 et le dossier 12 possèdent respectivement des armatures internes 13, 14 représentées en traits mixtes à la figure 1.

Les montants 15 de l'armature 14 du dossier se prolongent vers le bas par deux flasques latéraux fixes 16 qui supportent l'axe d'articulation XX' de l'armature 13 de l'assise.

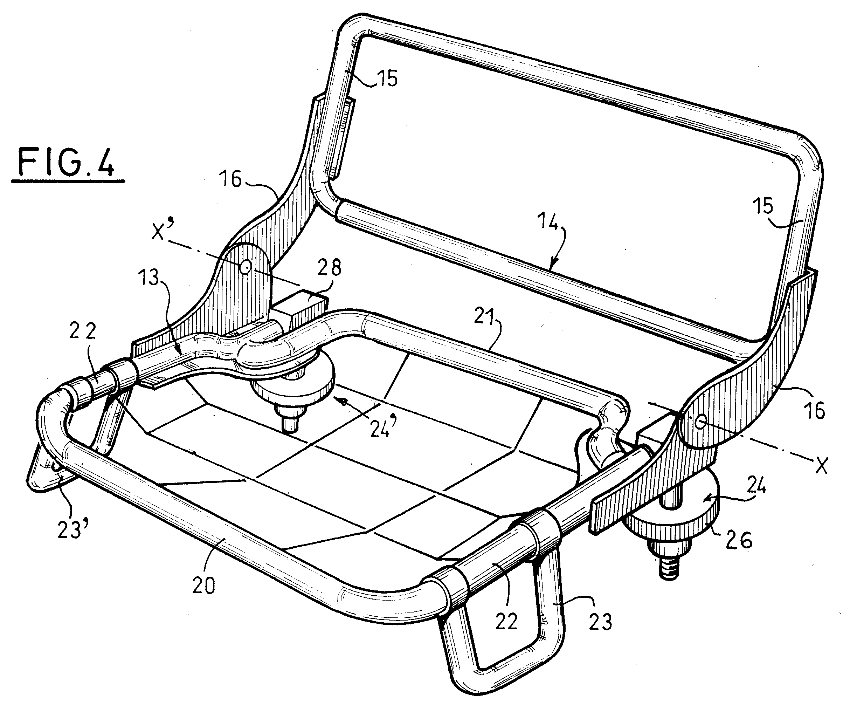

Ainsi que cela est représenté à la figure 4, l'armature 13 est réalisée sous la forme d'un cadre tubulaire soudé dans lequel un élément transversal antérieur 20 se prolonge latéralement par des éléments 22 rigidement reliés à un élément transversal postérieur 21. L'armature 13 supporte la matelassure de l'assise 11. Des pieds latéraux 23, 23' éventuellement repliables et des pieds d'ancrage 24, 24' de la partie postérieure du siège supportent l'ensemble du siège 10 au contact du plancher de chargement 25 du véhicule.

La surface du plancher de chargement est limitée transversalement par les parois latérales de l'habitacle telle que la paroi 6 de la figure 1 et porte quatre ouvertures de réception 27 des pieds d'ancrage 24, 24'.

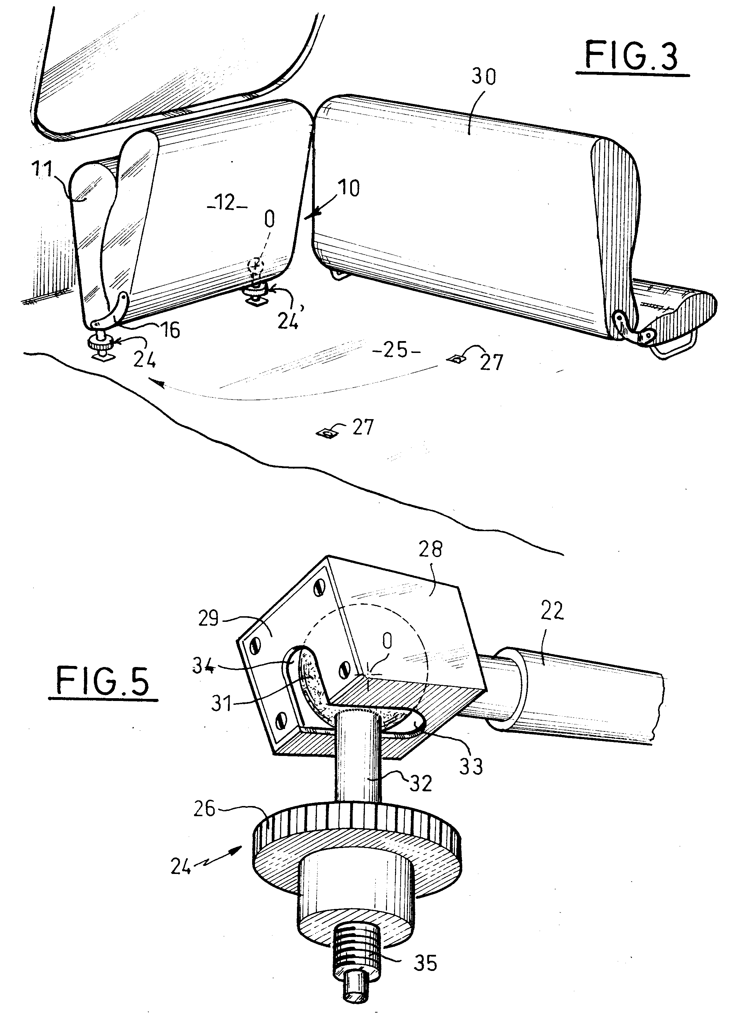

Ainsi que cela est représenté à la figure 5, l'un des pieds d'ancrage tel que 24' possède un centre de rotation O. L'autre pied d'ancrage 24 porte une molette d'immobilisation 26 dudit pied 24 au contact d'une ouverture de réception 27. Dans cette configuration, le siège 10 peut occuper au choix, la position représentée à la figure 1, dans laquelle le siège 10 occupe une position transversale adossée à une rangée de sièges 30 ainsi que la position longitudinale de rangement représentée à la figure 3 dans laquelle le siège est relevé contre la paroi 6.

Les figures 4 et 5 montrent plus en détail l'armature 13 sur laquelle les éléments latéraux 22, portent les pieds 24, 24'. A cet effet chaque pied est porté par un boîtier 28 à rainure 33 rapporté sur l'extrémité correspondante de l'élément 22. Le boîtier 28 contient le siège d'une tête d'orientation du pied tel que 24 ou 24'.

Selon la figure 5, la tête du pied 24 est constituée par une tête de rotule 31 orientable, dont le centre est assimilé au centre de rotation O et qui se prolonge par une queue orientable 32. Le boîtier 28 est lui-même fermé par un couvercle 29 et porte en prolongement l'une de l'autre deux rainures 33, 34 dans le but de favoriser l'orientation de l'élément 22 par rapport au centre de la tête de rotule 31 au cours du changement de position du siège.

Selon l'exemple de réalisation illustré à la figure 5 le pied d'ancrage 24 possède une extrémité de fixation manoeuvrée par la molette d'immobilisation 26. Celle-ci actionne à titre d'exemple une extrémité filetée 35 ou tout autre moyen de maintien dudit pied au contact du plancher 25.

Dans le but de permettre au siège d'occuper au moins une position longitudinale de rangement le long de l'une ou l'autre paroi 6, on prévoit au moins trois ouvertures de réception 27 réparties sur la surface du plancher 25 au sommet d'un carré dont les côtés sont en correspondance et égaux à l'écartement des pieds 24, 24' du siège.

Selon une variante de réalisation possible de l'invention, les pieds d'ancrage 24, 24' au contact du plancher 25 prolongent les montants 15 du dossier, tandisque l'assise 11 est supportée par des pieds latéraux tubulaires solidaires de l'armature 13.

L'invention s'étend également à une banquette 10 équipée d'un dossier 12 rabattable contre la face supérieure de l'assise autour de l'axe XX' dans le but d'utiliser fonctionnellement la face arrière du dossier sous forme d'une tablette support.

Les pieds d'ancrage 24, 24' peuvent par ailleurs porter tout moyen de manoeuvre et de verrouillage au contact du plancher, connu par l'art antérieur de la technique.

## Revendications

**1)** Siège escamotable monté sur le plancher de chargement (25) d'un véhicule, du type comportant une assise relevable (11) contre la face d'appui du dossier (12) dudit siège dans sa position de rangement le long d'une paroi latérale (6) de l'habitacle du véhicule, caractérisé par le fait que la partie postérieure du siège (10) porte deux pieds d'ancrage (24, 24') au contact du plancher (25) dont l'un au moins possède un centre de rotation (O), tandisque l'autre pied coopère par un moyen d'immobilisation (26) au contact du plancher, à l'obtention de deux positions différentes du siège respectivement selon une orientation transversale adossée à une autre rangée de sièges et une position longitudinale de rangement le long de ladite paroi latérale.

**2)** Siège selon la revendication 1, caractérisé par le fait que les pieds d'ancrage (24, 24') sont respectivement portés par les extrémités d'un élément (22) de l'armature (13) du siège.

**3)** Siège selon la revendication 2, caractérisé par le fait que l'élément d'armature (22) porte le logement (28) d'une tête d'orientable (31) du pied d'ancrage (24, 24').

**4)** Siège selon la revendication 3, caractérisé par le fait que la tête d'orientable (31) montée à l'extrémité d'un pied d'ancrage (24, 24') est constituée par une rotule (31) solidaire de l'armature (13) de l'assise (11) du siège.

**5)** Siège selon l'une quelconque des revendications 1 à 4, caractérisé par le fait que l'écartement des pieds d'ancrage (24, 24') du siège est égal au côté d'un carré dont au moins trois sommets portent les ouvertures de réception (27) desdits pieds portés par le plancher.
